# FASCICULE DE BREVET EUROPEEN

(11) **EP 2 286 092 B1**
(45) Date de publication et mention de la délivrance du brevet: **05.10.2016**
(21) Numéro de dépôt: 09750017.7
(22) Date de dépôt: 12.05.2009
(51) Int. Cl.: F15D 1/10, B64C 23/06

(54) **DISPOSITIF D'EXTREMITE D'AILE, DE PALE D'EOLIENNE OU D' HYDROLIENNE PERMETTANT DE DIMINUER VOIRE D'ANNULER LES TOURBILLONS MARGINAUX DITS VORTEX**
FLÜGELSPITZENVORRICHTUNG FÜR EINE FLÜGELSPITZE, LAUFSCHAUFEL EINER WINDKRAFTANLAGE ODER WELLENKRAFTANLAGE ZUR MINIMIERUNG BZW. UNTERDRÜCKUNG DES ALS FLÜGELSPITZENWIRBEL BEKANNTEN PHÄNOMENS
WING-TIP DEVICE FOR THE TIP OF A WING, THE BLADE OF A WIND GENERATOR OR OF A MARINE GENERATOR FOR REDUCING OR EVEN CANCELLING WHAT ARE KNOWN AS WING TIP VORTICES

(30) Priorité: 14.05.2008 FR 0802599
(43) Date de publication de la demande: 23.02.2011
(73) Titulaire: Hugues, Christian, 94400 Vitry sur Seine (FR)
(72) Inventeur: Hugues, Christian, 94400 Vitry sur Seine (FR)
(86) Numéro de dépôt international: PCT/FR2009/000547
(87) Numéro de publication internationale: WO 2009/141536

(56) Documents cités:
- FR-A- 2 823 541
- US-A- 3 974 986
- US-A- 4 478 380

## Description

Le brevet antérieur EP 1 456 081 B1 du demandeur décrivait un dispositif d'extrémité d'un profil d'aile ou plus généralement d'un élément comportant un intrados et un extrados et ce dispositif avait pour objet d'augmenter la portance, réduire la traînée induite et surtout supprimer les tourbillons marginaux dits vortex extrêmement dangereux dans le cadre de circulation aérienne.

Ce brevet précité exposait que ce dispositif pouvait s'appliquer aux ailes d'avions et pales de toutes sortes notamment les hélices propulsées telles que les pales d'éoliennes ou d'hydroliennes en permettant ainsi de produire plus d'énergie.

Cet effet vortex a un comportement déterminé dangereux et bruyant connu par sa vorticité agissant sur toute l'étendue de l'extrémité de l'aile ou de la pale et pour cette dernière, l'intensité est liée à la vitesse et l'angle d'attaque par rapport au fluide dans lequel il se déplace.

L'adaptation du dispositif écrit dans le brevet antérieur a déjà permis d'obtenir sur une éolienne standard un accroissement du rendement énergétique d'environ 14% par une vitesse vent de 10 m/s avec une atténuation corrélative du bruit mais l'accroissement recherché de ce rendement notamment par suite du développement considérable prévu du nombre d'éoliennes dans le monde, nécessite une adaptation plus performante de ce dispositif afin d'en accroître encore le rendement énergétique, ce qui entre dans le cadre de la présente invention.

Il a été constaté à l'approche des vitesses compressibles que le dispositif du brevet antérieur créait un faible départ de vorticité à l'extrémité proche du bord d'attaque et la surpression, crée par l'intrados qui est plus virulente, dépassait l'entrée du cylindre et se dirigeait vers l'extrados et était alors entraînée en direction du bord de fuite.

La différence au niveau de la corde de profil vers le bord de fuite, crée une dépression qui s'accentue au prorata de cette vitesse.

La combinaison de ces deux flux qui se rencontrent au bord de fuite, crée instantanément un mini-vortex qui se colle au voisinage du cylindre et la fente hélicoïdale passant par là à cette vitesse, ne fait qu'accentuer cette création de mini-vortex.

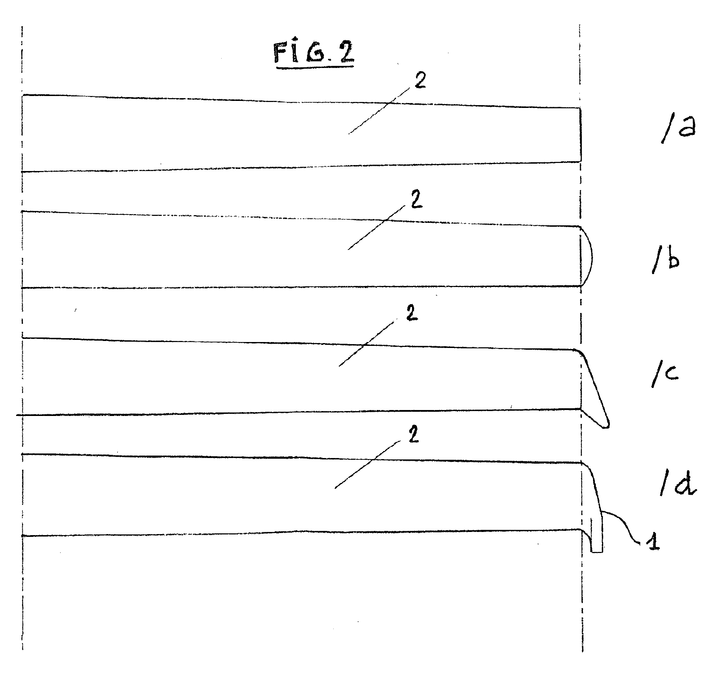

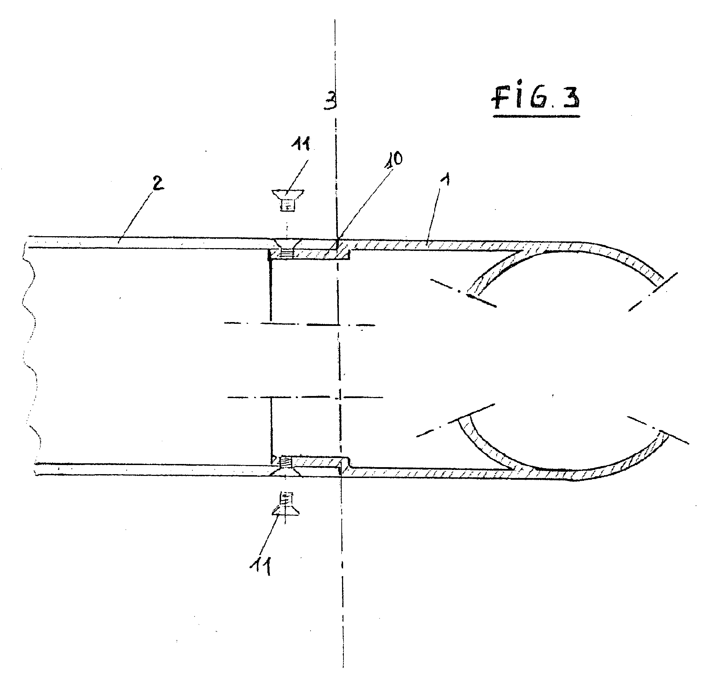

En d'autres termes et en examinant les figures 2 et 3 de ce brevet initial, les angles formés par le bord d'attaque repéré 1 et le biseau ovoïde (15) du cylindre d'extrémité d'aile repéré (22) ainsi que les angles résultant du bord de fuite repéré (2) et la paroi des cylindres repérés (22), sont faiblement perturbateurs dès que l'on entre en compression au prorata de la vitesse du flux et les courbures proposées à ce niveau par la présente invention vont, par l'effet COANDA ainsi obtenu, réduire voire annuler ces effets perturbateurs.

Plus précisément et en ce qui concerne les éoliennes en général que celles-ci soient bipales ou tripales, à rotor vertical ou horizontal, les paramètres de performances dépendent essentiellement pour un diamètre de l'ordre de 45 m par exemple, de la vitesse du vent ou l'on peut constater à cet égard, qu'entre 5m/s et 15 m/s, la puissance produite est de l'ordre de 8 KW à 650 KW considérant de plus que ce diamètre n'est pas limite et qu'il peut atteindre actuellement 80 m pour une puissance de 2500 KW et 126 m pour une puissance de 6000 KW avec bien entendu des systèmes de décrochage automatiques en cas de survitesse du vent.

La présente invention vise les éoliennes voire les hydroliennes mais non exclusivement, car le dispositif proposé s'applique également aux ailes d'avion ou à tous autres profils ayant un bord d'attaque et un bord de fuite se déplaçant dans un fluide liquide ou gazeux qui par effet COANDA sus mentionné obtenu en complément de l'effet propre au dispositif selon l'invention qui situé en bout d'aile annule la quasi totalité du vortex.

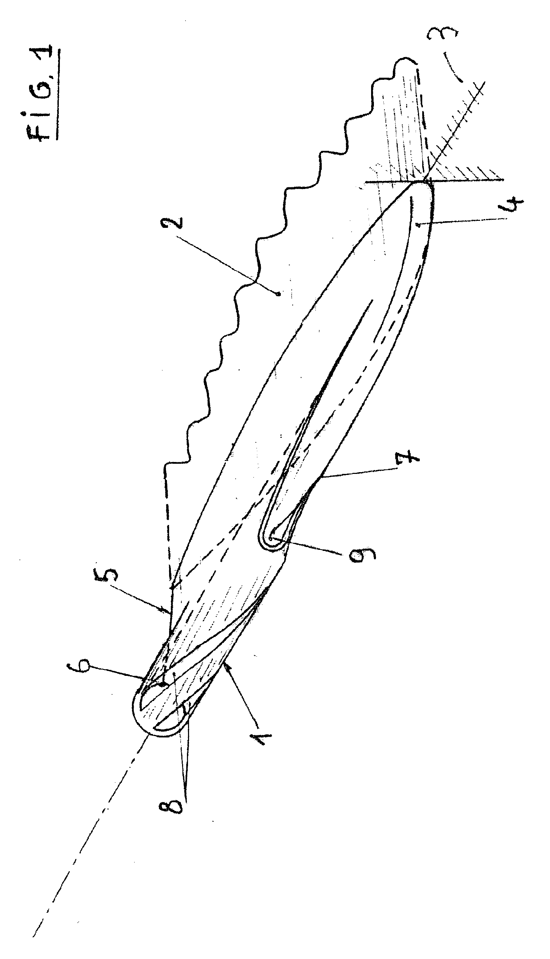

La figure 1 selon la description, montre en perspective le dispositif conforme à l'invention qui est repéré (1) dans son ensemble et qui est fixé sur l'extrémité de l'aile ou de la pale repérée (2) à l'interface (3) et le bord d'attaque dudit dispositif repéré (4) est courbe pour venir mourir à la moitié du cylindroïde au point (7) et le bord de fuite (5) dudit dispositif également courbe, vient mourir au point (6) correspondant à la moitié radiale de cette partie cylindroïde dudit dispositif qui présente en outre, une adaptation nouvelle de l'esthétique en bout d'aile ou de pale.

La partie cylindroïde qui est creuse comporte une ou des fentes hélicoïdales (8) et une ouverture longitudinale profilée (9) débouchant en coïncidence avec la décroissance au point (7) du profil (4) du bord d'attaque.

Selon l'ancien dispositif et dès que l'on approchait des vitesses compressibles, il se créait un départ de vorticité proche du bord d'attaque et l'effet de surpression crée par l'intrados plus virulente dépassait l'entrée du cylindre et se dirigeait vers l'extrados en se trouvant ensuite entraîné en direction du bord de fuite.

La combinaison des deux flux qui se rencontraient alors au bord de fuite, créait instantanément un mini-vortex qui se collait au voisinage du cylindre même niveau.

En résumé et selon le nouveau dispositif conforme à l'invention, la courbe du bord d'attaque (4) se terminant au point (7), produit un effet COANDA au vent relatif qui pénètre alors à l'intérieur de la partie cylindroïde par l'entrée (9) et la courbure d'extrémité de bord de fuite (5) se terminant au point (6) produit également un effet COANDA tandis que les surpressions d'intrados pénètrent dans la partie cylindroïde par la ou les fentes hélicoïdales (8) pour être évacuées vers l'extérieur.

En ce qui concerne la fixation du dispositif à l'aile ou la pale, il doit tout d'abord être noté que celles-ci sont toutes creuses et qu'en conséquence, il est possible d'incorporer aisément le présent dispositif à l'intérieur et en assurer sa fixation par des moyens simples connus.

La figure montre les différentes extrémités qui peuvent se présenter sur des ailes ou pales :
a / extrémité nette
b / extrémité avec saumon
c / extrémité avec winglet
   et dans ces deux derniers cas, on la rend nette par enlèvement desdits saumons ou winglets ou par sectionnement et la pose du dispositif selon l'invention, qui peut se faire alors par divers moyens, ne pose plus aucun problème d'où :
d / extrémité munie du dispositif 1 selon l'invention.

La figure 3 montre en outre, un autre moyen simple parmi d'autres pour assurer cette fixation en prévoyant sur le dispositif selon l'invention, un décrochement interne permettant un emboîtement avec l'aile ou la pale (2) creuse selon l'interface (3) et une fixation soit par collage, soit une fixation par vis (11) sur le dispositif selon l'invention, permettent ainsi une mise en place solide et enlèvement éventuel aisé dudit dispositif pour raison d'entretien par exemple.

En conclusion, la quasi-totalité des tourbillons dits vortex sont éliminés par application du présent dispositif qui peut s'appliquer sur tous les types de profils d'ailes ou de pales qu'elles soient éoliennes ou hydroliennes voire d'hélicoptères ou encore par extension sur tous profils situés dans un fluide liquide ou gazeux tel qu'entre autres les safrans ou stabilisateurs de bateaux, les directeurs de sous-marins, les profils de marées motrices, les becquets de voiture formule 1 ou autres mobiles.

### Nomenclature des dessins et figures :

- 1: - dispositif
- 2: - aile ou pale
- 3: - interface
- 4: - bord d'attaque
- 5: - bord de fuite
- 6: - terminaison bord de fuite
- 7: - terminaison bord d'attaque
- 8: - fente(s) hélicoïdale(s)
- 9: - entrée cylindroïde
- 10: - décrochement
- 11: - vis

## Revendications

1. Dispositif d'extrémité d'aile, de pale d'éolienne ou d'hydrolienne permettant de diminuer voire d'annuler les tourbillons marginaux dits vortex, ledit dispositif étant apte à être fixé à l'extrémité de ladite aile ou pale (2) à l'interface (3) et ledit dispositif comportant un canal cylindroïde muni d'une ou plusieurs fentes hélicoïdales (8) pratiquées sur ledit canal cylindroïde pour permettre l'évacuation totale du fluide résiduel vers l'extérieur, **caractérisé en ce que** ledit dispositif comporte en outre une courbe (4)de son bord d'attaque qui assure l'effet coanda et qui vient mourir en un point (7) situé sensiblement au milieu dudit dispositif et coïncidant avec une entrée ovoïde (9) dudit canal cylindroïde.

2. Dispositif selon la revendication 1 **caractérisé en ce qu'**il comporte des moyens de fixation pour être installé en bout d'aile ou de pale, ledits moyens de fixation comportant un décrochement interne (10) dudit dispositif permettant un emboîtage, et comportant soit des moyens de collage soit des moyens tels que des vis vissées solidairement sur ledit dispositif (1).

## Patentansprüche

1. Vorrichtung für die Spitze eines flügels, eines Windturbinenblatts oder einer Wasserturbinenschaufel, mit der spiralförmige Verwirbelungen, so genannte Flügelrandwirbel, reduziert oder sogar aufgehoben werden können. Diese Vorrichtung ist dafür geeignet, an der Spitze eines Flugzeugflügels, eines Turbinenblatts oder einer Turbinenschaufel (2) an der Schnittstelle (3) befestigt zu werden. Besagte Vorrichtung ist mit einem zylinderförmigen Kanal versehen, der einen oder mehrere spiralförmige Schlitze (8) aufweist, um die Evakuierung der Strömungswirbel nach außen zu ermöglichen. Außerdem ist diese Vorrichtung **dadurch gekennzeichnet, dass** die Vorderkante eine Wölbung (4) aufweist, diese sorgt für den Coanda-Effekt und läuft in einem Punkt (7) aus, der in etwa in der Mitte der Vorrichtung liegt und sich mit einem ovalen Einlass (9) des besagten zylinderförmigen Kanals deckt.

2. Vorrichtung nach Patentanspruch 1, **dadurch gekennzeichnet, dass** sie Befestigungsmittel aufweist, mit denen sie an der Spitze eines Flugzeugflügels, eines Turbinenblatts oder einer Turbinenschaufel installiert werden kann. Auf der Innenseite besagter Vorrichtung weist das Befestigungsmittel einen Absatz (10) auf, der ein Zusammenfügen durch Ineinanderstecken ermöglicht, sowie entweder Klebemittel oder Schrauben, die fest an der besagten Vorrichtung (1) verschraubt werden.

## Claims

1. Device for wing tip, wind turbine blade tip or hydraulic turbine blade tip allowing for the reduction or even the cancelling out of marginal swirls called vortex, the said device being capable of being fixed to the tip of the said wing or blade (2) at the interface (3) and the said device including a hollow cylindrical tube having one or several helical slots (8) made in the said hollow cylindrical tube to allow for the total evacuation of residual fluid to the outside, **characterized in that** the said device furthermore has a curve (4) of its leading edge which guarantees the Coanda effect and which ends at a point (7) situated approximately in the middle of the said device and coinciding with an ovoid entrance (9) of the said hollow cylindrical tube.

2. Device according to claim 1 **characterized in that** it includes means of fixation for fitting the said device to the wing tip or blade tip, the said means of fixation including an internal recess (10) of the said device permitting interlocking, and including either means of gluing or means such as screws integrally screwed to the said device (1).
